# EUROPÄISCHE PATENTSCHRIFT

(11) **EP 4 133 204 B1**
(45) Veröffentlichungstag und Bekanntmachung des Hinweises auf die Patenterteilung: **06.08.2025**
(21) Anmeldenummer: 21715482.2
(22) Anmeldetag: 22.03.2021
(51) Int. Cl.: F17C 3/08, F17C 3/00, E04H 7/04

(54) **SPEICHERBEHÄLTER**
STORAGE TANK FOR HYDROGEN
RÉCIPIENT DE STOCKAGE POUR HYDROGÈNE

(30) Priorität: 06.04.2020 EP 20020156
(43) Veröffentlichungstag der Anmeldung: 15.02.2023
(73) Patentinhaber: Linde GmbH, 82049 Pullach (DE)
(72) Erfinder: AIGNER, Herbert, 84367 Reut-Taubenbach (DE); SCHÖNBERGER, Manfred, 83342 Tacherting (DE)
(74) Vertreter: Meilinger, Claudia Sabine
(86) Internationale Anmeldenummer: PCT/EP2021/025113
(87) Internationale Veröffentlichungsnummer: WO 2021/204419

(56) Entgegenhaltungen:
- WO-A1-2008/036991
- WO-A1-2017/190846
- CA-A1- 2 570 766
- GB-A- 2 119 843
- KR-B1- 101 955 626
- US-A- 4 875 313

## Beschreibung

Die Erfindung betrifft einen Speicherbehälter für flüssigen Wasserstoff gemäß dem Oberbegriff des Anspruchs 1. Ein derartiger Speicherbehälter ist beispielsweise in WO 2008/036991A1 offenbart.

Speicherbehälter für flüssigen Wasserstoff weisen gemäß betriebsinternen Erkenntnissen der Anmelderin eine zylinderförmige Geometrie mit einem rohrförmigen Basisabschnitt sowie zwei gewölbten Deckelabschnitten auf, die den Basisabschnitt stirnseitig verschließen. Maritime Anwendungen derartiger Speicherbehälter mit Seegang können zu einer Druckreduzierung eines von der Gasphase erzeugten Gaspolsters führen. Dies kann unerwünschte Auswirkungen auf einen für Betriebskomponenten, beispielsweise einer Brennstoffzelle, zur Verfügung stehenden Versorgungsdruck mit Wasserstoff haben. Dies kann zu einem instabilen Betrieb der Betriebskomponenten führen. Dies gilt es zu vermeiden.

Vor diesem Hintergrund besteht die Aufgabe der vorliegenden Erfindung darin, einen insbesondere für maritime Anwendungen verbesserten Speicherbehälter für flüssigen Wasserstoff zur Verfügung zu stellen.

Demgemäß wird ein Speicherbehälter für flüssigen Wasserstoff vorgeschlagen. Der Speicherbehälter umfasst eine zylinderförmige Wandung, die rotationssymmetrisch zu einer entlang einer Schwerkraftrichtung verlaufenden Symmetrieachse aufgebaut ist, einen Boden, welcher die Wandung einseitig stirnseitig verschließt, eine Decke, welche die Wandung dem Boden abgewandt einseitig stirnseitig verschließt, und eine innerhalb der Wandung und beabstandet von dieser angeordnete Zwischenwand. Erfindungsgemäß ist zwischen einer Unterkante der Zwischenwand und dem Boden ein Spalt vorgesehen ist, so dass ein von der Zwischenwand umschlossener Innenraum mit einem von der Wandung umschlossenen Innenraum in Fluidverbindung ist, so dass der flüssige Wasserstoff zwischen den Innenräumen hin- und herströmen kann. Des Weiteren ist erfindungsgemäß ein um die Symmetrieachse umlaufender Spalt zwischen der zylinderförmigen Wandung und der Zwischenwand vorgesehen ist.

Dadurch, dass der Speicherbehälter vertikal angeordnet ist und diese Zwischenwand aufweist, können die vorstehend beschriebenen Nachteile vermieden werden.

Der Speicherbehälter ist insbesondere für maritime Anwendungen geeignet. Der Speicherbehälter kann daher als maritimer Speicherbehälter bezeichnet werden. Beispielsweise kann der Speicherbehälter an einem Fahrzeug, insbesondere an einem Wasserfahrzeug, montiert sein. Demgemäß wird auch ein Fahrzeug, insbesondere ein Wasserfahrzeug, mit einem derartigen Speicherbehälter vorgeschlagen. Der Speicherbehälter kann auch als Speichertank, als Wasserstoff-Speicherbehälter oder als Wasserstoff-Speichertank bezeichnet werden. Der Speicherbehälter ist zum Aufnehmen von flüssigem Wasserstoff gedacht. Der Speicherbehälter kann jedoch auch für andere kryogene Flüssigkeiten eingesetzt werden. Beispiele für kryogene Fluide oder Flüssigkeiten, oder kurz Kryogene, sind beispielsweise flüssiges Helium, flüssiger Stickstoff oder flüssiger Sauerstoff.

In dem Speicherbehälter bildet sich nach oder bei dem Einfüllen des Wasserstoffs eine Gaszone mit gasförmigem Wasserstoff sowie eine darunterliegende Flüssigkeitszone mit flüssigem Wasserstoff. Zwischen der Gaszone und der Flüssigkeitszone ist eine Phasengrenze vorgesehen. Der Wasserstoff weist also nach dem Einfüllen in den Speicherbehälter zwei Phasen mit unterschiedlichen Aggregatszuständen, nämlich flüssig und gasförmig, auf. Der Wasserstoff kann von der flüssigen Phase in die gasförmige Phase und umgekehrt übergehen. Die Zwischenwand ragt zumindest teilweise in die Flüssigkeitszone hinein. Bevorzugt ist die Zwischenwand stets zumindest teilweise mit flüssigem Wasserstoff umspült.

Die Wandung ist zylinderförmig, bevorzugt kreiszylinderförmig, aufgebaut. Die Zwischenwand weist ebenfalls vorzugsweise eine kreiszylinderförmige Geometrie auf. Dass die Zwischenwand von der Wandung "beabstandet" ist, bedeutet vorliegend, dass zwischen der Wandung und der Zwischenwand kein direkter Kontakt vorgesehen ist. Insbesondere ist die Zwischenwand radial von der Wandung beabstandet platziert. Die Zwischenwand ist insbesondere in Richtung des Bodens betrachtet stirnseitig offen oder geöffnet. Das heißt, dass der Begriff "umschlossen" auch Ausführungsformen umfasst, bei denen der jeweilige Innenraum zu dem anderen Innenraum hin offen oder geöffnet ist. Bezüglich einer Schwerkraftrichtung ist die Decke insbesondere oberhalb des Bodens platziert. Das heißt, dass der Speicherbehälter aufrecht oder vertikal platziert ist.

Dass die Symmetrieachse entlang der Schwerkraftrichtung verläuft, bedeutet vorliegend, dass die Symmetrieachse und damit auch der Speicherbehälter vertikal und nicht horizontal angeordnet sind. Das heißt, die Decke befindet sich bezüglich der Schwerkraftrichtung oben und der Boden befindet sich unten und somit unterhalb der Decke. Die Wandung verbindet die Decke mit dem Boden. Die Decke und der Boden sind bezüglich der Wandung insbesondere nach außen gewölbt.

Gemäß einer weiteren Ausführungsform ist die Zwischenwand rotationssymmetrisch zu der Symmetrieachse aufgebaut. Die Zwischenwand läuft somit mit einem radialen Abstand zu der Wandung um die Symmetrieachse um.

Der zwischen der Wandung und der Zwischenwand um die Symmetrieachse umlaufende Spalt ist vorzugsweise ringförmig. Der Spalt läuft vollständig um die Symmetrieachse um. Der Spalt ist vorzugsweise gasgefüllt. Der Spalt kann auch zumindest teilweise flüssigkeitsgefüllt sein. Das heißt, der Spalt kann zumindest teilweise mit flüssigem Wasserstoff und zumindest teilweise mit gasförmigem Wasserstoff gefüllt sein.

Gemäß einer weiteren Ausführungsform umfasst der Speicherbehälter mehrere rotationssymmetrisch zu der Symmetrieachse aufgebaute Zwischenwände, wobei die Zwischenwände koaxial zueinander angeordnet sind.

Die Anzahl der Zwischenwände ist beliebig. Beispielsweise sind zwei, drei oder mehr Zwischenwände vorgesehen. Die Zwischenwände sind vorzugsweise alle zylinderförmig aufgebaut und weisen einen rotationssymmetrischen Aufbau zu der gemeinsamen Symmetrieachse auf. "Koaxial" bedeutet dabei insbesondere, dass die Zwischenwände die gemeinsame Symmetrieachse aufweisen.

Gemäß einer weiteren Ausführungsform ist zwischen einer ersten Zwischenwand und einer innerhalb der ersten Zwischenwand angeordneten zweiten Zwischenwand ein um die Symmetrieachse umlaufender Spalt vorgesehen.

Der Spalt ist vorzugsweise ringförmig. Der Spalt ist insbesondere gasgefüllt. Der Spalt kann auch zumindest teilweise flüssigkeitsgefüllt sein. Es können auch noch eine dritte Zwischenwand und eine vierte Zwischenwand mit entsprechenden Spalten vorgesehen sein.

Gemäß einer weiteren Ausführungsform ist die Zwischenwand an der Wandung mit Hilfe von Abstützungen abgestützt.

Die Abstützungen können in der Art von Streben ausgebildet sein und verbinden die Zwischenwand mit der Wandung des Speicherbehälters. Die zweite Zwischenwand kann ebenfalls direkt an der Wandung abgestützt sein, oder die zweite Zwischenwand ist an der ersten Zwischenwand abgestützt. Die Anzahl der Abstützungen ist beliebig. Vorzugsweise sind zumindest drei Abstützungen vorgesehen, die gleichmäßig um die Symmetrieachse herum verteilt angeordnet sind.

Die Zwischenwand ist entlang der Symmetrieachse betrachtet von dem Boden mit einem Spalt beabstandet angeordnet. Das heißt, die Zwischenwand ist nicht mit dem Boden verbunden. Die Zwischenwand weist insbesondere eine Unterkante auf, die in den flüssigen Wasserstoff hineinragt. Insbesondere ist die Unterkante um den Spalt von dem Boden beabstandet angeordnet.

Gemäß einer weiteren Ausführungsform ist die Zwischenwand mit der Decke verbunden.

Vorzugsweise umfasst der Speicherbehälter einen Außenbehälter und einen in dem Außenbehälter aufgenommenen Innenbehälter. Die Zwischenwand ist insbesondere fest mit einem Deckenabschnitt des Innenbehälters verbunden, beispielsweise mit diesem verschweißt oder verlötet.

Gemäß einer weiteren Ausführungsform umfasst der Speicherbehälter ferner einen Innenbehälter zum Aufnehmen des Wasserstoffs und einen Außenbehälter, in welchem der Innenbehälter aufgenommen ist, wobei sich die Zwischenwand entlang der Symmetrieachse ausgehend von dem Deckel in Richtung des Bodens in den Innenbehälter hinein erstreckt.

Zwischen dem Innenbehälter und dem Außenbehälter kann ein Isolierelement vorgesehen sein. Der Innenbehälter und der Außenbehälter weisen jeweils einen rohrförmigen Basisabschnitt auf, der rotationssymmetrisch zu der Symmetrieachse aufgebaut ist. Der jeweilige Basisabschnitt ist stirnseitig einseitig mit einem Deckenabschnitt und dem Deckenabschnitt abgewandt einseitig mit einem Bodenabschnitt verbunden. Die jeweiligen Deckenabschnitte bilden die Decke des Speicherbehälters, die jeweiligen Bodenabschnitte bilden den Boden des Speicherbehälters. Die Basisabschnitte bilden die Wandung des Speicherbehälters.

Gemäß einer weiteren Ausführungsform erstreckt sich die Zwischenwand zumindest entlang einer Hälfte einer Länge des Innenbehälters in den Innenbehälter hinein.

Das heißt, die Zwischenwand weist entlang der Symmetrieachse betrachtet eine Länge auf, die zumindest gleich der Hälfte der Länge des Innenbehälters beziehungsweise länger als diese ist. Dabei ist jedoch nach wie vor zwischen der Unterkante der Zwischenwand und dem Boden des Speicherbehälters der zuvor erwähnte Spalt vorgesehen.

Gemäß einer weiteren Ausführungsform sind der Boden und die Decke bezüglich der Wandung nach außen und gegensinnig gewölbt.

Das heißt, der Boden und die Decke sind entlang der Symmetrieachse betrachtet von der Wandung weg gekrümmt. Wie zuvor erwähnt, weist der Boden die Bodenabschnitte des Innenbehälters und des Außenbehälters auf, und die Decke weist die Deckenabschnitte des Innenbehälters und des Außenbehälters auf.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen des Speicherbehälters umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Speicherbehälters hinzufügen. Die Erfindung ist jedoch allein durch den Schutzumfang der angehängten Ansprüche definiert.

Weitere vorteilhafte Ausgestaltungen des Speicherbehälters sind Gegenstand der Unteransprüche sowie der im Folgenden beschriebenen Ausführungsbeispiele des Speicherbehälters. Im Weiteren wird der Speicherbehälter anhand von bevorzugten Ausführungsformen unter Bezugnahme auf die beigelegten Figuren näher erläutert.
Fig. 1 zeigt eine schematische Seitenansicht einer Ausführungsform eines Fahrzeugs;
Fig. 2 zeigt eine schematische Schnittansicht einer Ausführungsform eines Speicherbehälters für das Fahrzeug gemäß Fig. 1; und
Fig. 3 zeigt eine weitere schematische Schnittansicht des Speicherbehälters gemäß der Schnittlinie III-III der Fig. 2.

In den Figuren sind gleiche oder funktionsgleiche Elemente mit denselben Bezugszeichen versehen worden, sofern nichts anderes angegeben ist.

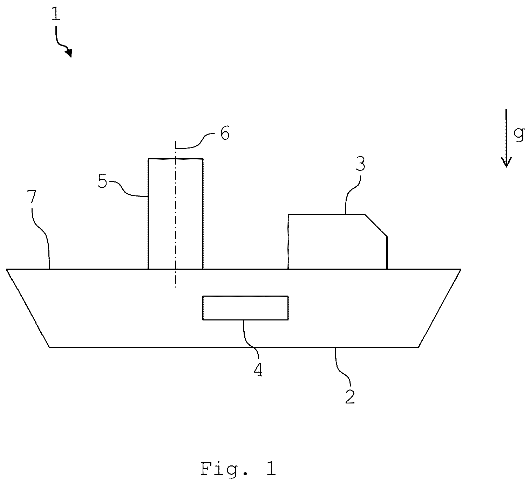

Die Fig. 1 zeigt eine stark vereinfachte schematische Seitenansicht einer Ausführungsform eines Fahrzeugs 1. Das Fahrzeug 1 kann beispielsweise ein maritimes Wasserfahrzeug, insbesondere ein Schiff, sein. Das Fahrzeug 1 kann als maritimes Fahrzeug bezeichnet werden. Insbesondere kann das Fahrzeug 1 eine maritime Personenfähre sein. Alternativ kann das Fahrzeug 1 auch ein Landfahrzeug sein. Nachfolgend wird jedoch davon ausgegangen, dass das Fahrzeug 1 ein Wasserfahrzeug ist.

Das Fahrzeug 1 umfasst einen Rumpf 2, der schwimmfähig ist. An oder auf dem Rumpf 2 ist eine Brücke 3 vorgesehen. Das Fahrzeug 1 wird vorzugsweise mit Wasserstoff betrieben. Hierzu kann das Fahrzeug 1 eine Brennstoffzelle 4 aufweisen. Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs 1 antreibt.

Zum Versorgen der Brennstoffzelle 4 mit Wasserstoff ist ein Speicherbehälter 5 zum Speichern von flüssigem Wasserstoff vorgesehen. Der Speicherbehälter 5 ist rotationssymmetrisch zu einer Mittel- oder Symmetrieachse 6 aufgebaut. Der Speicherbehälter 5 kann beispielsweise innerhalb des Rumpfs 2, insbesondere innerhalb eines Maschinenraums, auf der Brücke 3 oder auf einem als Fundament 7 fungierenden Deck des Rumpfs 2 angeordnet sein. Dabei ist die Symmetrieachse 6 entlang einer Schwerkraftrichtung g orientiert. Das heißt, der Speicherbehälter 5 ist aufrecht oder vertikal positioniert. Somit ist die Symmetrieachse 6 senkrecht zu dem Fundament 7 platziert. Für den Fall, dass das Fahrzeug 1 beispielsweise ein auf einen Wasserstoffantrieb umgerüstetes Fahrzeug ist, kann der Speicherbehälter 5 beispielsweise auch in einem Kamin oder Schornstein des Fahrzeugs 1 platziert sein.

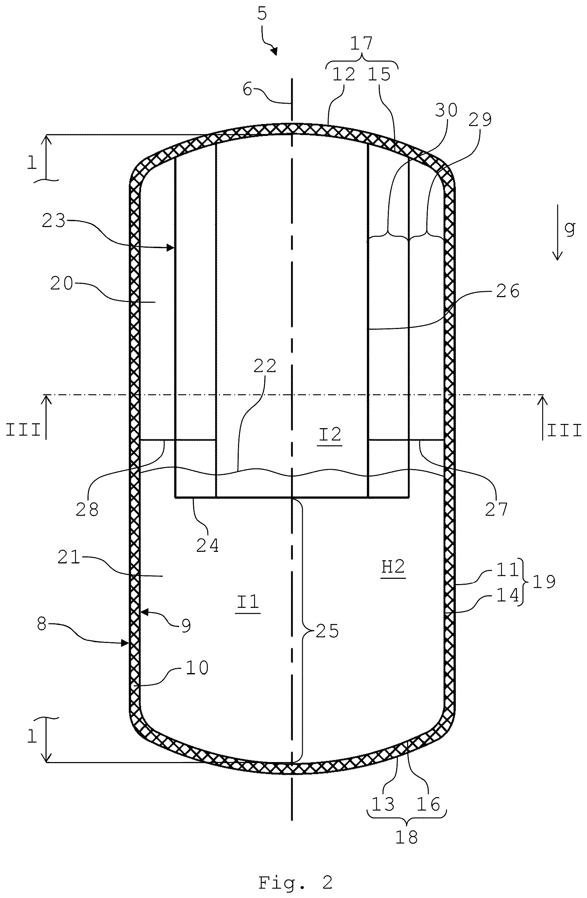

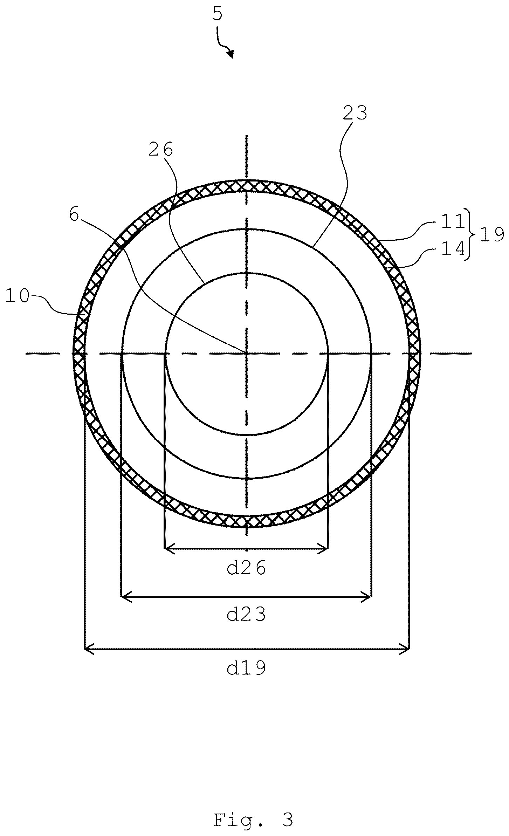

Die Fig. 2 zeigt eine schematische Schnittansicht einer Ausführungsform eines wie zuvor erwähnten Speicherbehälters 5. Die Fig. 3 zeigt eine weitere schematische Schnittansicht des Speicherbehälters 5 gemäß der Schnittlinie III-III der Fig. 2. Im Folgenden wird auf die Fig. 2 und 3 gleichzeitig Bezug genommen.

Der Speicherbehälter 5 kann auch als Speichertank bezeichnet werden. Wie zuvor erwähnt, ist der Speicherbehälter 5 zur Aufnahme von flüssigem Wasserstoff H2 (Siedepunkt 1 bara: 20,268 K = -252,882 °C) geeignet. Daher kann der Speicherbehälter 5 auch als Wasserstoff-Speicherbehälter oder als Wasserstoff-Speichertank bezeichnet werden. Der Speicherbehälter 5 kann jedoch auch für andere kryogene Flüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

Der Speicherbehälter 5 ist rotationssymmetrisch zu der Symmetrieachse 6 aufgebaut. Der Speicherbehälter 5 umfasst einen rotationssymmetrisch zu der Symmetrieachse 6 aufgebauten Außenbehälter 8 sowie einen rotationssymmetrisch zu der Symmetrieachse 6 aufgebauten Innenbehälter 9. Der Innenbehälter 9 ist dabei vollständig innerhalb des Außenbehälters 8 angeordnet. Zwischen dem Außenbehälter 8 und dem Innenbehälter 9 ist ein Dämmungselement oder Isolierelement 10 vorgesehen. Das Isolierelement 10 kann eine mehrlagige Isolationsschicht (Engl.: Multilayer Insulation, MLI) aufweisen oder als solche ausgebildet sein.

Der Außenbehälter 8 umfasst einen rohr- oder zylinderförmigen Basisabschnitt 11, der rotationssymmetrisch zu der Symmetrieachse 6 aufgebaut ist. Der Basisabschnitt 11 ist stirnseitig beidseits jeweils mit Hilfe eines Deckenabschnitts 12 und eines Bodenabschnitts 13 verschlossen. In der Orientierung der Fig. 2 beziehungsweise entlang der Schwerkraftrichtung g betrachtet ist dabei der Deckenabschnitt 12 oberhalb des Bodenabschnitts 13 angeordnet. Der Basisabschnitt 11 kann im Querschnitt eine kreisrunde oder annähernd kreisrunde Geometrie aufweisen. Der Deckenabschnitt 12 und der Bodenabschnitt 13 sind gewölbt. Der Deckenabschnitt 12 und der Bodenabschnitt 13 sind gegensinnig gewölbt, so dass der Deckenabschnitt 12 und der Bodenabschnitt 13 bezüglich des Basisabschnitts 11 nach außen gewölbt sind. Der Außenbehälter 8 ist fluiddicht, insbesondere gasdicht.

Der Innenbehälter 9 umfasst, wie der Außenbehälter 8, einen rohr- oder zylinderförmigen Basisabschnitt 14, der rotationssymmetrisch zu der Symmetrieachse 6 aufgebaut ist. Der Basisabschnitt 14 ist in der Orientierung der Fig. 2 oberseitig von einem Deckenabschnitt 15 und unterseitig von einem Bodenabschnitt 16 verschlossen. Der Basisabschnitt 14 kann im Querschnitt eine kreisrunde oder annähernd kreisrunde Geometrie aufweisen. Der Deckenabschnitt 15 und der Bodenabschnitt 16 sind gewölbt. Insbesondere sind der Deckenabschnitt 15 und der Bodenabschnitt 16 gegensinnig gewölbt, so dass der Deckenabschnitt 15 und der Bodenabschnitt 16 bezüglich des Basisabschnitts 14 nach außen gewölbt sind. Der Innenbehälter 9 ist fluiddicht, insbesondere gasdicht. Der Außenbehälter 8 und/oder der Innenbehälter 9 können ein nicht gezeigtes Abblasventil aufweisen.

Die beiden Deckenabschnitte 12, 15 bilden mit dem zwischen diesen liegenden Isolierelement 10 eine Decke 17 des Speicherbehälters 5. Die beiden Bodenabschnitte 13, 16 bilden mit dem zwischen diesen liegenden Isolierelement 10 einen Boden 18 des Speicherbehälters 5, und die beiden Basisabschnitte 11, 14 bilden mit dem zwischen diesen liegenden Isolierelement 10 eine rotationssymmetrisch um die Symmetrieachse 6 umlaufende Wandung 19 des Speicherbehälters 5. Die Wandung 19 umschließt einen Innenraum I1 des Speicherbehälters 5.

In dem Innenbehälter 9 beziehungsweise in dem Innenraum I1 ist der flüssige Wasserstoff H2 aufgenommen. In dem Innenbehälter 9 können, solange sich der Wasserstoff H2 im Zweiphasengebiet befindet, eine Gaszone 20 mit verdampftem Wasserstoff H2 und eine Flüssigkeitszone 21 mit flüssigem Wasserstoff H2 vorgesehen sein. Der Wasserstoff H2 weist also nach dem Einfüllen in den Innenbehälter 9 zwei Phasen mit unterschiedlichen Aggregatszuständen, nämlich flüssig und gasförmig, auf. Das heißt, in dem Innenbehälter 9 befindet sich eine Phasengrenze 22 zwischen dem flüssigen Wasserstoff H2 und dem gasförmigen Wasserstoff H2.

Der Speicherbehälter 5 weist ferner innerhalb des Innenbehälters 9 zumindest eine Zwischenwand 23 auf. Die Zwischenwand 23 weist eine zylinderförmige, insbesondere eine kreiszylinderförmige, Geometrie auf und ist rotationssymmetrisch zu der Symmetrieachse 6 aufgebaut. Dabei ist die Zwischenwand 23 mit der Decke 17 des Speicherbehälters 5, insbesondere mit dem Deckenabschnitt 15 des Innenbehälters 9, verbunden. Beispielsweise kann die Zwischenwand 23 mit dem Deckenabschnitt 15 verschweißt oder verlötet sein. Die Zwischenwand 23 umschließt einen Innenraum I2, der mit dem Innenraum I1 in Fluidverbindung ist. Der Innenraum I2 ist nicht geschlossen, sondern in Richtung des Bodens 18 offen oder geöffnet. Die Innenräume I1, I2 sind somit miteinander in Fluidverbindung.

Die Zwischenwand 23 ist insbesondere konzentrisch zu der Wandung 19 beziehungsweise zu den Basisabschnitten 11, 14 des Außenbehälters 8 und des Innenbehälters 9 aufgebaut. Die Zwischenwand 23 erstreckt sich ausgehend von der Decke 17 entlang der Schwerkraftrichtung in Richtung des Bodens 18. Dabei ist jedoch keine Verbindung zwischen dem Boden 18 und der Zwischenwand 23 vorgesehen. Zwischen einer Unterkante 24 der Zwischenwand 23 und dem Boden 18 ein Spalt 25 vorgesehen. Die Zwischenwand 23 erstreckt sich entlang der Symmetrieachse 6 betrachtet zumindest über die Hälfte einer Länge I des Innenbehälters 9 in den Innenbehälter 9 hinein. Dabei ragt die Zwischenwand 23 zumindest teilweise in die Flüssigkeitszone 21 hinein. Das heißt, die Zwischenwand 23 ist zumnindest abschnittsweise von flüssigem Wasserstoff H2 umspült.

Es können mehrere derartige Zwischenwände 23 vorgesehen sein. Beispielsweise sind eine erste Zwischenwand 23 sowie eine zweite Zwischenwand 26 vorgesehen. Die zweite Zwischenwand 26 ist ebenfalls zylinderförmig und rotationssymmetrisch zu der Symmetrieachse 6 aufgebaut. Dabei ist die zweite Zwischenwand 26 innerhalb der ersten Zwischenwand 23 angeordnet. Das heißt, die zweite Zwischenwand 26, die erste Zwischenwand 23 und die Wandung 19 sind konzentrisch angeordnet. Die zweite Zwischenwand 26 endet ebenfalls an der Unterkante 24.

Die erste Zwischenwand 23 und/oder die zweite Zwischenwand 26 können mit Hilfe von Abstützungen 27, 28 gegenüber der Wandung 19 beziehungsweise dem Basisabschnitt 14 des Innenbehälters 9 abgestützt sein. Die Anzahl der Abstützungen 27, 28 ist beliebig. Beispielsweise sind drei derartige Abstützungen 27, 28 vorgesehen, die gleichmäßig um die Symmetrieachse 6 herum verteilt angeordnet sind.

Zwischen der Wandung 19 und der ersten Zwischenwand 23 ist ein um die Symmetrieachse 6 umlaufender Spalt 29 vorgesehen. Der Spalt 29 kann teilweise mit flüssigem und teilweise mit gasförmigen Wasserstoff H2 gefüllt sein. Zwischen der ersten Zwischenwand 23 und der zweiten Zwischenwand 26 ist ein um die Symmetrieachse 6 umlaufender Spalt 30 vorgesehen. Auch der Spalt 30 kann teilweise mit flüssigem und teilweise mit gasförmigen Wasserstoff H2 gefüllt sein.

Wie die Fig. 3 zeigt, weist die zweite Zwischenwand 26 einen Durchmesser d26 auf, der kleiner als ein Durchmesser d23 der ersten Zwischenwand 23 ist. Der Durchmesser d23 wiederum ist kleiner als ein Durchmesser d19, insbesondere ein Innendurchmesser, der Wandung 19 beziehungsweise des Basisabschnitts 14 des Innenbehälters 9.

Die Funktion des Speicherbehälters 5 wird nachfolgend erläutert. Durch den vertikalen Aufbau beziehungsweise durch die vertikale Anordnung des Speicherbehälters 5 allein reduziert sich schon der Sloshing-Effekt, da die durch den Seegang angeregte Bewegung des flüssigen Wasserstoffs H2 durch den vertikalen Einbau deutlich reduziert ist und dieser nur auf die senkrecht angeordnete Wandung 19 prallt. Durch den Einbau der ersten Zwischenwand 23 beziehungsweise der Zwischenwände 23, 26 vermindert sich das Schwappen des flüssigen Wasserstoffs H2 in dem Speicherbehälter 5 nochmals. Der Einbau der Zwischenwände 23, 26 kann in dem vertikal angeordneten Speicherbehälter 5 mit geringem Aufwand realisiert werden, da die Bewegung des flüssigen Wasserstoffs H in allen Richtungen identisch wirkt und nicht Längs- und Querbewegungen des flüssigen Wasserstoffs H2 betrachtet werden müssen.

### Verwendete Bezugszeichen

- 1: Fahrzeug
- 2: Rumpf
- 3: Brücke
- 4: Brennstoffzelle
- 5: Speicherbehälter
- 6: Symmetrieachse
- 7: Fundament
- 8: Außenbehälter
- 9: Innenbehälter
- 10: Isolierelement
- 11: Basisabschnitt
- 12: Deckenabschnitt
- 13: Bodenabschnitt
- 14: Basisabschnitt
- 15: Deckenabschnitt
- 16: Bodenabschnitt
- 17: Decke
- 18: Boden
- 19: Wandung
- 20: Gaszone
- 21: Flüssigkeitszone
- 22: Phasengrenze
- 23: Zwischenwand
- 24: Unterkante
- 25: Spalt
- 26: Zwischenwand
- 27: Abstützung
- 28: Abstützung
- 29: Spalt
- 30: Spalt

- d19: Durchmesser
- d23: Durchmesser
- d26: Durchmesser
- g: Schwerkraftrichtung
- I1: Innenraum
- I2: Innenraum
- H2: Wasserstoff
- I: Länge

## Patentansprüche

1. Speicherbehälter (5) für flüssigen Wasserstoff (H2), mit einer zylinderförmigen Wandung (19), die rotationssymmetrisch zu einer entlang einer Schwerkraftrichtung (g) verlaufenden Symmetrieachse (6) aufgebaut ist, einem Boden (18), welcher die Wandung (19) einseitig stirnseitig verschließt, einer Decke (17), welche die Wandung (19) dem Boden (18) abgewandt einseitig stirnseitig verschließt, und einer innerhalb der Wandung (19) und beabstandet von dieser angeordneten Zwischenwand (23, 26), **dadurch gekennzeichnet, dass** zwischen einer Unterkante (24) der Zwischenwand (23, 26) und dem Boden (18) ein Spalt (25) vorgesehen ist, so dass ein von der Zwischenwand (23, 26) umschlossener Innenraum (I2) mit einem von der zylinderförmigen Wandung (19) umschlossenen Innenraum (I1) in Fluidverbindung ist, so dass der flüssige Wasserstoff zwischen den Innenräumen (I1, I2) hin- und herströmen kann, und wobei zwischen der zylinderförmigen Wandung (19) und der Zwischenwand (23) ein um die Symmetrieachse (6) umlaufender Spalt (29) vorgesehen ist.

2. Speicherbehälter nach Anspruch 1, wobei die Zwischenwand (23, 26) rotationssymmetrisch zu der Symmetrieachse (6) aufgebaut ist.

3. Speicherbehälter nach einem der Ansprüche 1 oder 2, umfassend mehrere rotationssymmetrisch zu der Symmetrieachse (6) aufgebaute Zwischenwände (23, 26), wobei die Zwischenwände (23, 26) koaxial zueinander angeordnet sind.

4. Speicherbehälter nach Anspruch 3, wobei zwischen einer ersten Zwischenwand (23) und einer innerhalb der ersten Zwischenwand (23) angeordneten zweiten Zwischenwand (26) ein um die Symmetrieachse (6) umlaufender Spalt (30) vorgesehen ist.

5. Speicherbehälter nach einem der Ansprüche 1 - 4, wobei die Zwischenwand (23, 26) an der Wandung (19) mit Hilfe von Abstützungen (27, 28) abgestützt ist.

6. Speicherbehälter nach einem der Ansprüche 1 - 5, wobei die Zwischenwand (23, 26) mit der Decke (17) verbunden ist.

7. Speicherbehälter nach einem der Ansprüche 1 - 6, ferner umfassend einen Innenbehälter (9) zum Aufnehmen des Wasserstoffs (H2) und einen Außenbehälter (8), in welchem der Innenbehälter (9) aufgenommen ist, wobei sich die Zwischenwand (23, 26) entlang der Symmetrieachse (6) ausgehend von dem Deckel (17) in Richtung des Bodens (18) in den Innenbehälter (9) hineinerstreckt.

8. Speicherbehälter nach Anspruch 7, wobei sich die Zwischenwand (23, 26) zumindest entlang einer Hälfte einer Länge (I) des Innenbehälters (9) in den Innenbehälter (9) hineinerstreckt.

9. Speicherbehälter nach einem der Ansprüche 1 - 8, wobei der Boden (18) und die Decke (17) bezüglich der Wandung (19) nach außen und gegensinnig gewölbt sind.

## Claims

1. Storage tank (5) for liquid hydrogen (H2), comprising a cylindrical wall (19) which is constructed rotationally symmetrically to an axis of symmetry (6) running in a direction of gravity (g), a base (18) which closes the wall (19) on one side at the end face, a top part (17) which closes the wall (19) on one side at the end face facing away from the base (18), and an intermediate wall (23, 26) arranged within the wall (19) and at a distance therefrom, **characterized in that** a gap (25) is provided between a lower edge (24) of the intermediate wall (23, 26) and the base (18), so that an interior space (12) enclosed by the intermediate wall (23, 26) is in fluidic connection with an interior space (11) enclosed by the cylindrical wall (19), so that the liquid hydrogen can flow back and forth between the interior spaces (11, 12), and a gap (29) extending about the axis of symmetry (6) being provided between the cylindrical wall (19) and the intermediate wall (23).

2. Storage tank according to claim 1, wherein the intermediate wall (23, 26) is constructed rotationally symmetrically to the axis of symmetry (6).

3. Storage tank according to either claim 1 or claim 2, comprising a plurality of intermediate walls (23, 26) that are constructed rotationally symmetrically to the axis of symmetry (6), wherein the intermediate walls (23, 26) are arranged coaxially to one another.

4. Storage tank according to claim 3, wherein a gap (30) extending about the axis of symmetry (6) is provided between a first intermediate wall (23) and a second intermediate wall (26) arranged within the first intermediate wall (23).

5. Storage tank according to any of claims 1 - 4, wherein the intermediate wall (23, 26) is supported on the wall (19) by means of supports (27, 28).

6. Storage tank according to any of claims 1 - 5, wherein the intermediate wall (23, 26) is connected to the top part (17).

7. Storage tank according to any of claims 1 - 6, further comprising an inner tank (9) for accommodating the hydrogen (H2) and an outer tank (8) in which the inner tank (9) is accommodated, wherein the intermediate wall (23, 26) starts from the top part (17) and extends in the direction of the base (18) into the inner tank (9) along the axis of symmetry (6).

8. Storage tank according to claim 7, wherein the intermediate wall (23, 26) extends into the inner tank (9) at least along one half of a length (I) of the inner tank (9).

9. Storage tank according to any of claims 1 - 8, wherein the base (18) and the top part (17) are curved outward and in opposite directions in relation to the wall (19).

## Revendications

1. Réservoir de stockage (5) pour de l'hydrogène liquide (H2), comportant une paroi (19) cylindrique qui est construite avec une symétrie de rotation par rapport à un axe de symétrie (6) s'étendant le long d'une direction de gravité (g), un fond (18) qui ferme la paroi (19) d'un côté côté frontal, une partie supérieure (17) qui ferme la paroi (19) d'un côté côté frontal à l'opposé du fond (18), et une paroi intermédiaire (23, 26) disposée à l'intérieur de la paroi (19) et à une certaine distance de celle-ci, **caractérisé en ce qu'**une fente (25) est prévue entre un bord inférieur (24) de la paroi intermédiaire (23, 26) et le fond (18), de sorte qu'un espace intérieur (I2) entouré par la paroi intermédiaire (23, 26) est en liaison fluidique avec un espace intérieur (I1) entouré par la paroi (19) cylindrique, de sorte que l'hydrogène liquide peut s'écouler entre les espaces intérieurs (I1, I2), et dans lequel une fente (29) s'étendant autour de l'axe de symétrie (6) est prévue entre la paroi (19) cylindrique et la paroi intermédiaire (23).

2. Réservoir de stockage selon la revendication 1, dans lequel la paroi intermédiaire (23, 26) est construite avec une symétrie de rotation par rapport à l'axe de symétrie (6).

3. Réservoir de stockage selon l'une des revendications 1 ou 2, comprenant plusieurs parois intermédiaires (23, 26) construites avec une symétrie de révolution par rapport à l'axe de symétrie (6), dans lequel les parois intermédiaires (23, 26) sont disposées de manière à être coaxiales entre elles.

4. Réservoir de stockage selon la revendication 3, dans lequel une fente (30) s'étendant autour de l'axe de symétrie (6) est prévue entre une première paroi intermédiaire (23) et une seconde paroi intermédiaire (26) disposée à l'intérieur de la première paroi intermédiaire (23).

5. Réservoir de stockage selon l'une des revendications 1 à 4, dans lequel la paroi intermédiaire (23, 26) est supportée sur la paroi (19) à l'aide de supports (27, 28).

6. Réservoir de stockage selon l'une des revendications 1 à 5, dans lequel la paroi intermédiaire (23, 26) est reliée à la partie supérieure (17).

7. Réservoir de stockage selon l'une des revendications 1 à 6, comprenant en outre un récipient intérieur (9) destiné à recevoir l'hydrogène (H2) et un récipient extérieur (8) dans lequel est reçu le récipient intérieur (9), dans lequel la paroi intermédiaire (23, 26) s'étend dans le récipient intérieur (9) le long de l'axe de symétrie (6) à partir de la partie supérieure (17) en direction du fond (18).

8. Réservoir de stockage selon la revendication 7, dans lequel la paroi intermédiaire (23, 26) s'étend dans le réservoir intérieur (9) au moins le long d'une moitié d'une longueur (I) du réservoir intérieur (9).

9. Réservoir de stockage selon l'une des revendications 1 à 8, dans lequel le fond (18) et la partie supérieure (17) sont bombés vers l'extérieur et en sens inverse par rapport à la paroi (19).
